# EUROPEAN PATENT APPLICATION

(11) **EP 2 363 054 A1**
(43) Date of publication of application: **07.09.2011**
(21) Application number: 11156675.8
(22) Date of filing: 02.03.2011
(51) Int. Cl.: A47L 15/00, A47L 15/42

(54) **Method and machine for treating dishes**

(30) Priority: 02.03.2010 IT TO20100155
(71) Applicant: Indesit Company S.p.A., 60044 Fabriano (AN) (IT)
(72) Inventor: Benedetto, Gianluca, 60044 Fabriano (Ancona) (IT); Brugnera, Maria Chiara, 60044 Fabriano (Ancona) (IT)
(74) Representative: Gallarotti, Franco

(57) **Abstract**

A dishwashing machine (1) has a control system (17) including command means (17a) for controlling starting of a treatment program that includes at least one loading step, at least one heating step and at least one treatment step. The control system (17) is configured for controlling loading means (6), an electric pump (12) and heating means (15) during the execution of a treatment program, such that:
- during the loading step a substantially predetermined amount of water is loaded in the tub (3);
- during the heating step water loaded in the tub (3) is heated up to a substantially predetermined temperature;
- during the treatment step the electric pump (12) is driven at a treatment speed for supplying heated water from the bottom (3a, 14) of the tub (3) to a sprinkling member (8), so as to render operation of the first sprinkling member (8) effective for the purposes of treating dishes.

The machine comprises means (12; 13) for supplying the sprinkling member (8), during the heating step at a reduced pressure, which is lower than the minimum pressure required to render operation of the sprinkling member (8) effective, causing at the same time a water circulation among the electric pump (12), the sprinkling member (8) and the bottom (3a, 14) of the tub (3).

## Description

### Field of the invention

The present invention refers to a method for treating dishes in a dishwashing machine and to a dishwashing machine.

### Background of the invention

Modem dishwashers comprise a washing tub, inside of which one or more removable dish-holding baskets are arranged. One or more sprinkling member operate inside the tub. Dishwashing machines with limited load capacity normally comprise a single dish-holding basket and a single sprinkling member; instead, the most common machines for domestic use are provided with at least two superimposed dish-holding baskets and two sprinkling members, which are normally found one under the lower basket and one under the upper basket. The sprinklers have holes or nozzles for water outlets, turned toward the respective basket.

Under the normal operation of a dishwasher, water is loaded into the wash tub from the water network so to collect on the bottom thereof. The bottom of the tub typically includes a collection well, usually provided with a water filtering system. A washing pump draws water collected in the well and sends it to the sprinklers. The water exits from the nozzles and strikes the dishes contained in the corresponding baskets with relevant force, for the purpose of treating them.

The head of the pump and the characteristics of the hydraulic system of the machine are chosen such that the pump produces a pressure in the circuit adapted to produce jets of water exiting the sprinklers of a height such to consent a significant wetting of the load of dishes contained in the baskets, and also adapted to cause rotation of the sprinkler so that the entire load is wetted.

For the purpose of treating dishes, for example a washing or a rinsing thereof, the water must be heated to a certain temperature established by a program, indicatively comprised between 40 and 65°C. Heating is effected by means of one or more electrical resistances.

The entire volume of water necessary for performing a treatment phase can be loaded in the tub and heated under static conditions, that is, without activating the wash pump. However, this approach requires that a heating element and a collecting well with large dimensions be used, which complicates construction of the machine and subtracts space for installation of other components. The heat developed by the resistance would substantially localize in the surrounding of the resistance itself, rendering the process of heat diffusion to the mass of static water much slower. This would be inefficient, because the water near the resistance would heat quickly, blocking further release of heat from the resistance. To avoid burning out the resistance, it must not have a high specific power (per unit of surface area), necessitating that it have large dimensions to achieve the same overall power.

In more recent dishwashing machines the step of water loading and the step of heating are carried out under dynamic conditions.

In particular, soon after starting to load from the water mains into the tub, the wash pump is activated, so to immediately force part of the water from the well into the circuit feeding the sprinklers. Substantially, in this way a volume of water corresponding to the volume defined by the sprinklers and their supply conduits is removed from the well, so that the dimensions of the well can be limited, allowing anyway the precise quantity of water necessary for a treatment phase to be supplied.

Similarly, the water heating phase is carried out under dynamic conditions, with the wash pump and resistance simultaneously active. Heating under dynamic conditions allows less bulky heating elements to be used, being able to have a higher specific power, because the movement of the water facilitates distribution of heat in the entire volume of water.

This type of approach has the disadvantage that, during the heating step, part of the thermal energy is transferred to the dishes and to the walls of the tub. In fact, with the pump in the active condition, the water exiting from the rotating sprinklers strikes the load of dishes, typically comprising plates and pans, which absorb part of the heat from the water; a part of the water reaches also the walls of the tub, transferring heat thereto. The heating process is relatively inefficient and long, especially considering that - at least for the purpose of effecting the washing phase in the strict sense - the dishes need only be heated superficially.

These problems are not encountered if the water is heated under static conditions. However, as was said, such an approach requires the use of a heating element and a collecting well having large dimensions, with the associated disadvantages.

For this reason solutions in which the water heating step is performed under dynamic conditions were proposed, but using a dedicated auxiliary circuit. In these solutions the machine is essentially provided with a specific recirculation conduit, usually connected between the delivery section of the pump and the well. During the heating step, supplying of the sprinkling members is prevented and the water exiting the pump is admitted entirely into the above-said recirculation conduit. In that way, circulation of water between the well and the pump is established, while the resistance is active. Once the required water temperature is reached, supply to the sprinkling members is enabled, and conversely, the passage of hot water into the recirculation conduit is blocked. One solution of this type is known from EP-A-1578242. Another solution of this type is known from EP-A-1004266, which provides for a water preheating phase under dynamic conditions, by means of a recirculation conduit and upon absence of dishes loaded in the tub of the machine.

This type of solution has some drawbacks. In the first place, the machine must be equipped with valve means directly linked to the function of the recirculation conduit, in addition to those for preventing supply to the sprinklers (which are already provided for other purposes in some dishwashers), namely the valve means that allow water to pass through the recirculation conduit or not, depending on the moment. The known solution then requires a dedicated recirculation conduit, which occupies a certain space inside the machine. In the case of EP-A-1004266, another practical disadvantage for the user is added to these disadvantages, in that the water must be preheated before the dishes are loaded and the actual treatment thereof is started.

The above said EP-A-1578242 also provides for an embodiment in which no additional valve means are provided, since wetting of the dishes is prevented by the fact that the pump forces the washing liquid at a low pressure during the heating phase, such that only a small amount of liquid can leave the sprinkling member associated to the lower basket, i.e. with a very reduced flow-rate. After the desired temperature for the washing liquid has been attained, the circulation power is increate by the control system, such that the sprinkling system can acts on the dishes.

The circumstance that the pump forces the washing liquid with such a low pressure that only a small amount of liquid is allowed to exit the sprinkling member can cause malfunctions of the machine, due to charge losses which take place in an occasional and unpredictable way in the hydraulic circuit associated to the system "pump - lower sprinkler". This is, for example, the case of a clogging - even a poor one - of the liquid filtering system which is located in the collecting well, due to dirt residues which have not been previously evacuated from the machine. In such a condition, the reduced pressure or flow-rate generated by the pump is no longer sufficient for causing an effective recirculation of the liquid by means of the sprinkler, the volume of the liquid remaining mainly static in the in the well and the bottom of the tub: this causes a sudden overheating of the liquid, with the subsequent risks for the integrity of machine's components and the user's safety.

### Summary of the invention

The present invention aims to provide a method and a machine for the treatment of dishes alternative to known methods and machines, that allows the indicated drawbacks to be solved.

These aims are achieved, according to the invention, by a method for treating dishes according to claim 1 and by a dishwashing machine according to claim 10. Advantageous characteristics of the method and the machine according to the invention are indicated in the dependent claims. The claims form an integral part of the technical teaching provided herein in relation to the invention.

Briefly, the invention relates to a method for the treatment of dishes in a dishwashing machine, comprising:
i) at least one loading step, including loading an amount of water in a tub of the machine in which dishes are contained in a basket;
ii) a heating step, including heating water loaded in the tub up to a substantially predetermined temperature, in at least part of the heating step the electric pump being active;
iii) a treatment step, including driving an electric pump of the machine at a treatment speed, to supply heated water from the bottom of the tub to at least one dish-sprinkling member, and render operation of the at least one sprinkling member effective for the purpose of treating the dishes.

The heating step comprises supplying at least one dish-sprinkling member, arranged below the basket and spaced therefrom, with the water leaving the electric pump, to cause a water circulation among the electric pump, the at least one sprinkling member and the bottom of the tub, with the at least one sprinkling member supplied at a pressure which is lower than the minimum pressure required to render operation of the at least one sprinkling member effective. The pressure for supplying the sprinkler is anyway greater than the minimum pressure required for obtaining effective liquid jets leaving the sprinkling member, having such a height to cover a significant part of the distance between the sprinkling member and the basket, possibly also slightly lapping the lower part of the basket.

In this way, even if the sprinkling member is supplied during the heating step, it is not effective for the purpose of treating the dishes and this does not cause substantial loss of heat from the water, or results in reduced loss of heat, even if the water is made to circulate through the tub. With this solution, the step of heating water under dynamic conditions does not require a specific recirculation system, with a dedicated conduit and respective valve means. The fact that the pump is driven so as to cause jets which actually develop in height from the sprinkling member implies that the generated pressure or flow-rate are anyway adapted to cope with the occasional charge losses of the system "pump - sprinkler" which are due, for example, to dirt residues, thus guaranteeing an effective circulation of the liquid to be heated.

In a first embodiment, the electric pump is driven at a reduced speed, which is lower than the treatment speed and lower than the minimum speed required for obtaining a head from the electric pump that is sufficient to render operation of the at least one sprinkling member effective, anyway sufficient for generating the above said effective jets. The effective jets have a height indicatively comprised between about 3 mm and about 30 mm, preferably between about 5 and about 20 mm, very preferably between about 10 and about 15 mm. In a second embodiment, a pressure drop is introduced in a conduit that connects the electric pump to the at least one sprinkling member, such to cause said reduced pressure. In this second embodiment the electric pump may also be driven at said treatment velocity, but the result is substantially equivalent to that obtainable with the first embodiment because the pressure drop introduced is such to render operation of the at least one sprinkling member ineffective, the pressure or the flow-rate of the liquid being anyway sufficient to cope with the above said occasional charge losses of the pump-sprinkler system.

In the first embodiment, during the heating step the water is not brought substantially in contact with the dishes, due to the fact that the water exiting from the electric pump supplies a sprinkling member arranged under the dishes and said reduced speed is lower than the minimum speed required to obtain from the electric pump jets having a sufficient height for causing significant wetting of the dishes by the sprinkling member. Similarly, in the second embodiment a sprinkling member arranged under the dishes is supplied and said pressure drop is such that the water supplied to the sprinkling member, even if causing jets which develop in height, does not have sufficient pressure to cause a significant wetting of the dishes.

In this way, in both embodiments the water escapes from the sprinkling member with jets whose height is not sufficient to reach the dishes, or is such to slightly lap the lower part of the basket and the dishes. Thus the water circulates through the tub during the heating phase, but without entering substantially in contact with the dishes, and therefore, without transferring heat to the dishes or yielding to the dishes only a very limited amount of heat.

In one embodiment, one sprinkler is arranged under the dishes and one further sprinkling member is arranged above the same dishes; during the heating step the water leaving the electric pump is not supplied the further sprinkling member. This avoids that water leaves from the further sprinkler during the heating step and strikes the dishes from above, transferring heat thereto.

Supplying of the above said further sprinkling member can be prevented through valve means. Valve means normally used on the machine for selectively supplying the two sprinkling members, for example for the purpose of performing known treatment programs on a reduced load or for performing alternating phases of washing and rinsing (that is, performed by alternately supplying one or the other sprinkling member), can be advantageously used for this purpose.

The supplying of the above said further sprinkling member can also be prevented without using valve means. In one embodiment of this type, the water exiting the electric pump is directed to a conduit connected to the further sprinkling member but, as a result of said reduced motor speed or said pressure drop, the electric pump has a head lower than the minimum head required to allow water directed to the conduit to supply the further sprinkling member. In this way, the water substantially rises in said conduit, but only up to a certain point, without reaching the further sprinkling member and/or supplying it.

In one embodiment, during the heating step the water leaving the electric pump supplies at least one rotatable sprinkling member and said reduced pressure is lower than the minimum pressure required to cause rotation of the at least on rotatable sprinkling member.

In this way, even if the jets that leaves the sprinkling member reaches some dishes, the member itself is not rotated. In this way, the water exiting from the stationary sprinkling member strikes the overlying or underlying dish basket to a limited extent. Therefore, this water essentially always follows substantially the same course through the wash tub, always affecting the same limited part of the dishes. Therefore, the water transfers heat only to this limited part of the dishes; as dynamic heating proceeds, the amount of heat transferred from the water also tends to progressively diminish, due to the simultaneous progressive heating of said limited part of the dishes. Therefore, also this embodiment provides benefits in terms of energy savings with respect to the known art that envisions sprinkling of the entire load of dishes during the dynamic heating step. With respect to the known art described in EP-A-1578242, this embodiment provides comparatively less energy savings, but has the advantage of not requiring a specific recirculation system with dedicated conduit and corresponding valve means; the solution is advantageous also with respect to the second embodiment mentioned in the above said prior art document, in that the pressure or flow-rate generated by the pump is in any able to cope with the occasional charge losses of the pump-sprinkler system. Also in this case, if the sprinkling system comprises one upper rotatable sprinkling member, water exiting the electric pump during the heating step may not be supplied to the upper sprinkling member, by using for example valve means normally employed for performing known programs for treatment of a reduced load or for performing alternating wash or rinse phases, or a reduced head from the electric pump due to it being driven at a reduced speed or to an introduced pressure drop. Even if the further sprinkling member is supplied, the reduced speed of the electric pump or the pressure drop introduced are such to prevent rotation thereof, so that if the exiting water reaches the dishes, it affects a limited part of such dishes.

Preferably, but not necessarily, the heating step is started while the loading step is still underway. In this way, the overall duration of the treatment program can be reduced to some extent. The resistance can also be active during at least part of a treatment phase. Also preferably, a plurality of heating steps are performed during the treatment program, at least some of which are followed by a corresponding treatment step.

The dishwashing machine according to the invention comprises a washing tub, at least one first basket for containing dishes in the tub, loading means for loading water in the tub, a sprinkling system including at least one first sprinkling member for sprinkling from below dishes contained in the first basket with water, an electric pump for supplying water from the bottom of the tub to the first sprinkling member, heating means for heating water, and a control system including control means for controlling starting of a treatment program which includes at least one loading step, at least one heating step and at least one treatment step. According to the invention, the machine has means for supplying the first sprinkling member during the heating step at a reduced pressure, that is lower than the minimum pressure required to render operation of the first sprinkling member effective, while causing a circulation of water among the electric pump, the first sprinkling member and the bottom of the tub. The supply pressure of the sprinkling member is in any case greater than the minimum pressure required for obtaining effective liquid jets exiting the sprinkling member, having a height sufficient for covering a significant part of the distance between the sprinkling member and the basket, possibly also slightly lapping the lower part of the basket.

Therefore, also in this case, the above said reduced pressure of water during the heating step is such to not cause a wetting, or a significant wetting, of the dishes by the sprinkling member and/or to not cause rotation of the sprinkling member, while preventing the risks deriving from the above said occasional charge losses of the pump-sprinkler system.

In one embodiment, the said means comprise a controllable speed motor of the electric pump, and the control system is prearranged for driving the motor of the electric pump during the heating step at a reduced speed, which is lower than the treatment speed and lower than the minimum speed required for obtaining from the electric pump a water flow at a pressure sufficient to render operation of the first sprinkling device effective, anyway sufficient for generating the above said effective jets, which have a height indicatively comprised between about 3 mm and about 30 mm, preferably between about 5 and about 20 mm, very preferably between about 10 and about 15 mm.

In another embodiment, the above said means comprise a hydraulic device that is switchable for introducing a pressure drop in a conduit that connects the electric pump to the at least a first sprinkling member, and the control system is prearranged for controlling the switchable hydraulic device during the heating step for obtaining the above said reduced pressure.

### Brief description of the drawings

Further characteristics and advantages of the present invention will be clear from the description that follows, made with reference to the annexed drawings, provided by way of non-limiting example only, in which:
- figure 1 is a schematic diagram in section of a dishwasher according to a first embodiment of the invention;
- figure 2 is a simplified block diagram of a part of the control system of the dishwasher of figure 1;
- figure 3 is a schematic diagram in section of a dishwasher according to a second embodiment of the invention;
- figure 4 is a simplified block diagram of a part of the control system of the dishwasher of figure 3;
- figures 5-7 are schematic diagrams in section of dishwashers according to additional possible embodiments of the invention.

### Description of preferred embodiments of the invention

Reference throughout this specification to "*one embodiment*" means that a particular feature, structure or characteristic described in connection with the embodiment is included in at least one embodiment. Thus, the phrases "*in one embodiment*" and the like, present in various places throughout this description, are not necessarily all referring to the same embodiment. Furthermore, the particular features, structures or characteristics may be combined in any suitable manner in one or more embodiments. The reference numbers provided herein are for convenience only and do not interpret the scope or meaning of the embodiments.

Where not specified differently, in this description and in the attached claims, terms such as "*supply*"*,* "*supplying*" and the like, when used in connection with a sprinkling member, indicate that water, forced by a pump in a hydraulic system of the machine, reaches the sprinkling member and escapes from its holes or nozzles, towards the inside of the tub of the dishwasher, all of this being independent of whether such water then contacts the dishes contained in the tub or not.

Where not specified differently, in this description and in the attached claims, terms such as "*effective*"*,* when used in reference to operation of a sprinkling member of the machine, indicates that such sprinkling member operates fully for the purpose of the treatment of the dishes contained in the tub, for example a washing or a rinsing. In such context, effective operation of a sprinkling member, whether it be static or rotatable, implies that water escapes from the holes or nozzles of such member with jets high enough to reach the dishes contained in the tub, so to be able to perform its treatment function. In the case of a rotatable sprinkling member, effective operation implies that the water pass through the sprinkling member and exit from its nozzles with a pressure sufficient to cause it to rotate and/or to have jet heights sufficient to reach the load, so that - due to such rotation - the member cyclically sprinkles substantially the entire load of dishes contained in the relative basket with water.

Where not specified differently, in this description and in the attached claims, terms such as "*effective*"*,* when used in reference to jets of liquid exiting a sprinkling member of the machine, indicates that said jets actually develops in height, starting from the sprinkling member towards an overhanging basket, with a height which can be indicatively comprised between about 3 mm and about 30 mm, preferably about 5 mm and about 20 mm, most preferably between about 10 mm and about 15 mm. As already highlighted, the pressure or the flow-rate generated by the pump are thus able to cope with the occasional charge losses of the system "pump - lower sprinkler", due for instance to dirt residues, for guaranteeing an effective circulation of the liquid.

It is also specified that, in the description that follows, only the elements useful for understanding the invention will be described, assuming that the machine according to the invention comprises all of the other elements themselves known for the normal operation of a domestic dishwasher.

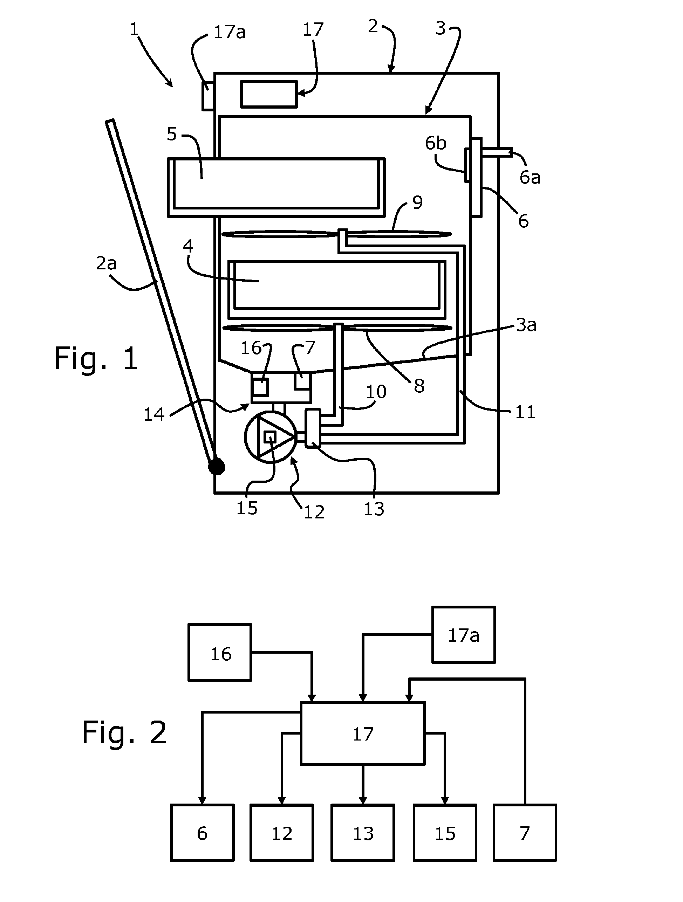

In figure 1, reference 1 indicates as a whole a dishwashing machine according to the present invention. The machine 1 has a supporting structure or cabinet 2, within which a wash tub 3 is defined. Inside the tub 3, a lower basket 4 and an upper basket 5 are provided for containing respective loads of dishes in the tub. The baskets 4 and 5 are mounted - in a known way - to be extractable and/or removable through a front opening of the tub 3. However, the invention is also susceptible of being applied to machines provided with a single basket or also to machines provided with more than two baskets. In the example, a front door 2a is hinged to the structure 2, the internal part of which forms a closing wall of the front opening of the tub 3.

The machine 1 has loading means for loading water into the tub 3, that can be of any known type. In the non limiting example illustrated, these means include an air-break device, indicated with 6 as a whole, having an inlet 6a for connection to a domestic water network and an outlet 6b in fluid communication with the inside of the tub 3; an electric valve controlled by a control system of the machine is operatively interposed between the inlet 6a and the air-break device. The loading means are configured to load a substantially predetermined amount of water into the tub 3, which amount may vary according to the type of treatment program and/or in function of the operative step of the treatment program. For that purpose, the loading means include dosing means of a known type, such as a level sensor, with one or more levels, for example a pressure switch, or an impeller-type gauge; in the example represented, a pressure switch indicated with 7 is provided for this purpose, for example a two-level pressure switch.

The machine 1 has a sprinkling system that includes at least a first sprinkling member 8 to sprinkle the dishes contained in a corresponding basket with water, i.e., the basket 4. In the case represented, the machine has two baskets 4, 5 and the sprinkling system also includes a second sprinkling member 9, to sprinkle the dishes contained in basket 5 with water. However, the invention is susceptible of being applied also to machines provided with a single sprinkling member, or also to machines provided with more than two sprinkling members. The sprinkler 8 is located below the basket 4, spaced apart from the bottom of said basket.

Preferably, the sprinkling members 8 and 9 are rotatable sprinklers, of known design; here it is sufficient to specify that one such sprinkler has a hollow plastic or metal body that is rotatably mounted at the end of a corresponding supply conduit belonging to the hydraulic system of the machine, such that an outlet of the conduit is in fluid communication with the inlet of the sprinkler body. The sprinkler body has - at least on its part facing a respective dish-carrying basket - a series of holes or nozzles, through which water is forcefully sprayed on the dishes contained in the basket, for the purpose of a wash or rinse treatment. In the example shown, the hydraulic circuit of the machine includes two supply conduits, indicated with 10 and 11, for sprinklers 8 and 9, respectively.

Reference 12 indicates an electric pump, that is, a pump driven by an electric motor, for example a centrifugal pump, having an inlet section and an outlet section, which is in fluid communication with the inlets of the conduits 10 and 11.

In the embodiment of figure 1, valve means 13 are operatively interposed between the delivery section of the pump and the inlets of the conduits 10 and 11. The valve means 13, which are controlled by the control system of the machine 1, are switchable at least between a first condition, in which the delivery section of the electric pump 12 is in fluid communication with the sprinklers 8 and 9, through the relative conduits 10 and 11, and a second condition, in which the delivery section of the electric pump 12 is in fluid communication with only one of the sprinklers 8 and 9, for example sprinkler 8, through conduit 10.

The valve means 13 can comprise two electrovalves, each at the entrance of the respective conduit 10 and 11 or operative along the respective conduit 10 and 11.

In a preferred embodiment the valve means 13 consist of a device for alternate supplying of the sprinklers. Devices of this type are generally known (see for example DE-A-3904359 or DE-A-10000772) and normally provided on some dishwashers to allow execution of treatment programs on the contents of only one of a pair of baskets, for example in the case of a reduced load of dishes, or to perform treatment programs with alternate supply to a pair of sprinkling members, all according to known art.

Below, and where not specified differently, it is assumed that the means 13 consist of one said device for alternate supplying, having a closure member or distributor member susceptible of assuming at least a first position of opening both conduits 10 and 11, and a second position of opening conduit 10 and closing conduit 11; the distributor member can possibly also be capable of assuming a third position of opening conduit 11 and closing conduit 10.

The tub 3 has a bottom 3a that converges into a collecting well, indicated with 14, having an exit in fluid communication with the inlet section of the pump 12. The well 14 is also itself of known design and may include a water filtering system (intending pure water or water to which washing or rinsing agents have been added). In the example shown, the level sensor 7 is operatively associated in a known way with the well 14.

As from the known art, for the purpose of performing a dish treatment step, such as a wash step or a rinse step, the water loaded in the tub reaches the bottom 3a and flows towards the well 14. The water is drawn from the well 14 by means of the pump 12, which forces the water into the conduits 10 and/or 11, to supply the sprinklers 8 and/or 9. The water exiting from the sprinklers 8 and/or 9 strikes the dishes contained in the baskets 4 and/or 5, and falls to the bottom 3a, to then return to the well 14 and - after filtering - be returned to circulation by the pump 14. At the end of the treatment cycle, the water present in the well 14 and/or on the bottom 3a of the tub is removed from the machine 1, by means of a known discharge pump, not shown.

The machine 1 further comprises heating means to heat the water loaded in the tub. Also these means can be of any known type. The heating means preferably include at least one electrical resistance 15, the electrical supplying of which is controlled by the control system of the machine 1. In the example shown, the resistance 15 is integrated in the electric pump 12, for example at the delivery section thereof; additionally or alternatively, an electric resistance can be arranged in the well 14, or mounted adjacent to the bottom of the tub 3a or in the intake branch of the pump, so to be submerged in the water during or at the end of a step of loading water into the tub, all according to known art.

The system may also include sensor means to detect the water temperature, that are in signal communication with the control system of the machine. In the example shown, these sensor means include a temperature sensor 16, of any type known in the field, arranged in the well 14; such location is clearly intended by way of example only. Heating of the water may be time-programmed, that is, with the resistance 15 being activated for a predetermined period of time, in which case sensor means 16 are not necessary.

Reference 17 indicates the control system of the machine, preferably of the type based on an electronic microprocessor, that comprises memory means or to which memory means are operatively associated. As from known art, the control system 17 is configured to supervise operation of the machine 1, and therefore, execution of the treatment program or programs executable by the machine. Preferably, data necessary for the execution of a plurality of treatment programs are contained in the memory means of the control system 17 and the system includes control means, indicated with 17a, such as a control panel or user interface, provided with means for choosing a program from among those available and for starting it. Figure 2 shows schematically and by way of example only, a possible example of interaction between the control system and some of the components cited previously.

One or more treatment programs executable by the machine generally comprise a plurality of operative phases that are carried out with water, for example one or more wash phases and one or more rinse phases. At least some of these phases carried out with water can in turn include a loading step, at least one heating step, at least one treatment step and one discharge step. Note however that phases are also possible in which water already present in the tub is reused or in which the water is not heated.

In the loading step, a substantially predetermined quantity of water is loaded into the tub 3. In function of the choice and start of the treatment program through the command means 17a, the control system 17 controls opening of the electric valve of the device 6, to admit water from the water network into the tub. When a certain water volume or level is reached, detected by means of sensor 7, the system 17 closes the electric valve of the device 6.

During the heating step water loaded in the tub 3 is heated to a substantially predetermined temperature. For that purpose, the system enables electric supply to the resistance 15. Electric supply to the resistance 15 is interrupted by the system 17 when it detects through sensor 16 that the temperature substantially predetermined by the program has been reached, or when a predetermined time expires, in the case of time-programmed heating. In addition, as will be clear below, in the case of the present invention also the pump 12 is started during the heating step.

During the successive treatment step, the system 17 drives the pump 12 at a determined treatment speed, necessary to supply heated water, from the bottom of the tub 3a to the sprinkling member 8 and/or 9, so to render the operation of such system effective for the purpose of treating the dishes. Therefore, into practice, the motor of the pump 12 is driven at a speed adapted to confer a pressure to the water in conduits 10 and 11 such that the water escapes from the holes of the sprinklers 8 and 9 with a jet height sufficient to fully strike the dishes contained in the respective baskets 4 and 5 and exert the function of washing or rinsing; meanwhile, the water passes through each sprinkler 8, 9 with sufficient pressure to cause their rotation, so that the dishes are cyclically struck by the water jets. At the end of the treatment step, or of the last treatment step envisaged, the discharge step is performed, through which the water used previously for treating the dishes is discharged from the tub 3, by means of the discharge pump controlled by the system 17.

In a first embodiment of the present invention the motor of the electric pump 12 is a controllable speed motor, of any known type suitable for the purpose. For example, in a preferred embodiment, the motor is a *brushless* motor with permanent magnets, and the control system 17 includes a driving circuit - of a known type - that allows precise variation and control of the rotational speed of the motor. The motor of the electric pump 12 can also be an asynchronous motor, with control of its speed effected through means - these also known - capable of partializing the supply current.

Also according to this first embodiment of the invention, the control system 17 is prearranged for driving the motor of the pump 12, during at least part of the heating step, so as to supply at least one of the sprinklers 8 and 9 with water exiting from the pump, and consequently cause a circulation of the water among the pump 12, the at least one sprinkler 8 and/or 9 and the bottom 3a, 14 of the tub 3.

More particularly, according to said first embodiment of the invention, the system 17 is prearranged to drive the motor of the pump 12 so that, during the heating step, the relative motor rotates at a reduced speed, so that the effective jets exiting the sprinkler 8 do not reach the dishes, or lap the lower part only, where such reduced speed is lower than both the treatment speed used in the treatment step and the minimum speed required to render operation of the sprinkler 8 effective. In particular, in the presently described embodiment, the reduced speed is lower than the minim speed required from obtaining from the pump 12 a water pressure sufficient for causing a complete wetting of the dishes contained in the basket 4. As seen above, the supply pressure of the sprinkler 8 is anyway greater than the minimum pressure required for obtaining effective liquid jets exiting the sprinkling member, having such a height to cover a significant part of the distance between the sprinkler 8 and the basket 4, possibly also slightly lapping the lower part of the basket; the above said effective jets have preferably a height indicatively comprised between about 3 mm and about 30 mm, preferably between about 5 and about 20 mm, very preferably between about 10 and about 15 mm.

The following is a practical example of the operation of the hydraulic circuit of the machine 1 during the heating step, according to the first embodiment.

The control system 17 verifies the condition of the device 13; if the device 13 is already in the corresponding second condition (conduit 10 open and conduit 11 closed); the system 17 drives the pump 12 at said reduced speed; instead, if the device 13 is in the first condition (conduit 11 open and conduit 10 closed), the system 17 switches the device 13 to the second condition and then drives the pump 12 at the reduced speed.

The pump 12 draws water from the well 14 and forces it into conduit 10, up to the inside of the sprinkler 8; because of the reduced pressure of the fluid exiting pump 12, the water leaves from the holes of the sprinkler 8 with jets of insufficient height to wet the dishes contained in basket 4, or with a height sufficient for lapping them only in the lower part thereof. Preferably, the head of pump 12 is also such that the water pressure does not cause rotation of the sprinkler 8.

Therefore, the water falls to the tub bottom 3a and collects in the well 14, to be re-entered in circulation by the pump 12 and further heated by the resistance 15. The water is made to circulate in this way until the sensor 16 detects that the substantially predetermined temperature envisioned by the treatment program is reached.

Then, if necessary, the system 17 controls switching of the device 13, for example but not necessarily to the first condition, and starts the treatment step. Then the system 17 drives the motor of the pump 12 at the treatment speed, therefore supplying the sprinklers 8 and 9 with a pressure such to render their operation effective, or such to cause the water sprayed from the sprinklers 8 and 9 to strike the dishes contained in the baskets 4 and 5 and cause rotation of the sprinklers themselves.

It is also clear that, according to the type of program set, the treatment step can also be carried out using only one of the two sprinklers 8 and 9, or each of the sprinklers alternately. Thus, for example in the case of a reduced load of dishes, the treatment step can be carried out with device 13 in the second condition, if such dishes are contained only in basket 4, or with device 13 in the third condition, if the reduced load of dishes is contained only in basket 5. In the case of alternate-type treatment, the system 17 will control cyclical switching of the valve means 13 between the second and the third condition.

The discharge step can be provided for immediately after the treatment step. However, in one embodiment, multiple treatment and/or heating steps are provided before execution of the discharge step (for example it is possible to have a final heating with the aim of heating the air in the tub).

Since the water transfers heat to the dishes and in part to the walls of the tub, during the execution of a treatment step the water temperature tends to progressively decrease. When the sensor 16 detects a temperature below a lower threshold, for example as provided for by the treatment program (or after a predetermined time period), the system controls termination of the treatment step in progress and the beginning of a new heating step, in the manner explained previously. When the water is again heated to the predetermined temperature, the second heating step will end and a second treatment step will be started, and so on and so forth until the last treatment step envisioned, which can be followed by a discharge step.

It will be appreciated that, in this way, the same water loaded in the tub can be used in different steps with different temperatures in the context of the same program phase (for example a wash phase). For example, in a first heating step the predetermined temperature could be 60°C, for the successive execution of a first treatment step; in a second heating step the predetermined temperature could be 55°C, for the successive execution of a second treatment step, and so on. Such capability is obtainable by means of a simple prearrangement of the treatment programs.

In a second embodiment of the invention, preferably but not necessarily alternative to the use of a controllable speed motor, the machine 1 is provided with a hydraulic shutter or partializing device, that is switchable by the control system 17, to introduce a determined pressure drop in the supply branch of at least one of the sprinklers 8 and 9, or in both of the sprinklers 8 and 9. Said shutter device can be of any known type adapted to introduce a narrowing in the conduit supplying one or both of the sprinklers, so as to cause a pressure drop sufficient for the purposes described below.

In a particularly advantageous embodiment, the partializing function is integrated in the device 13 for alternate supplying, prearranged for this purpose. By way of example, such a device 13 can be of the type that has a hollow body, with an inlet connected to the delivery section of the electric pump 12 and two outlets, each connected to a respective conduit 10, 11 supplying a corresponding sprinkler 8 and 9. A distributor or closure member is mounted in said body, configured at least to open or close said outlets, that is, to ensure that the flow entering the body passes into one outlet or into the other outlet, or in both outlets, to supply one, the other or both of the sprinklers, as previously explained. Said distributor member can have the form of a disk or circular section, with one or more through holes, and is mounted movably in front of the above said outlets.

In a possible implementation of the second embodiment of the invention, the above said distributor member is shaped such that in one of its predetermined positions, it functions as a shutter, i.e. it introduces the above said pressure drop in the conduit 10 that connects the electric pump 12 to the sprinkler 8. This pressure drop can for example be obtained by providing a hole having reduced or o appropriately calibrated dimensions in the distributor member that, in said predefined position, faces the outlet of the device 13 connected to conduit 10. Regardless of the construction of the hydraulic device, the pressure drop is such that the sprinkler 8 is supplied with a reduced pressure, which is lower than the minimum pressure required to render operation of the sprinkler effective. In that way, the height of the effective jets exiting from sprinkler 8 is such that the water does not reach the dishes contained in basket 4, or merely laps to a limited extent.

Operation of the machine 1 in this second embodiment is substantially similar - regarding effects during the heating phase - to the operation described previously in connection with to the first embodiment.

In this second embodiment the control system 17 controls the device 13 so that the distributor member takes on said predefined position (for example, in which the cited hole of reduced section faces the inlet of conduit 10, while the inlet of conduit 11 is closed). As said, in this case the motor of the electric pump 12 does not necessarily need to be of a variable speed type: thus, the system 17 drives the pump 12 at the normal treatment speed. The pump 12 draws water from the well 14 and forces it into device 13, where the above said pressure drop is introduced. The water passes into conduit 10 at the reduced pressure, until reaching the inside of the sprinkler 8: because of the reduced fluid pressure, the water escapes from the holes of the sprinkler 8 with a height insufficient for wetting the dishes.

Also in this case the water then falls onto the tub bottom 3a and collects in well 14, to be re-entered in circulation by the pump 12 and heated further by the resistance 15. When the substantially predefined temperature as provided for by the treatment program is reached, the system 17 controls the switchable device 13, thereby removing the above said pressure drop. Suppose that, for example, the device 13 is brought to the first condition, and then the treatment step is started. The motor of the pump 12 rotates at the treatment speed, to supply the sprinklers 8 and 9 with a pressure that is now such to render operation thereof effective, or such as to cause the water sprayed from the sprinklers 8 and 9 to fully strike the dishes contained in the baskets 4 and 5 and causes rotation of the sprinklers themselves.

According to the type of program set, also the treatment step can be performed using only one of the two sprinklers 8 and 9, or both of the sprinklers alternately, as explained previously in the first embodiment.

For the remainder, the operation of the machine according to the second embodiment is similar to that described previously, as to activation of the heating steps, their possible alternation with treatment steps, execution of the discharge step.

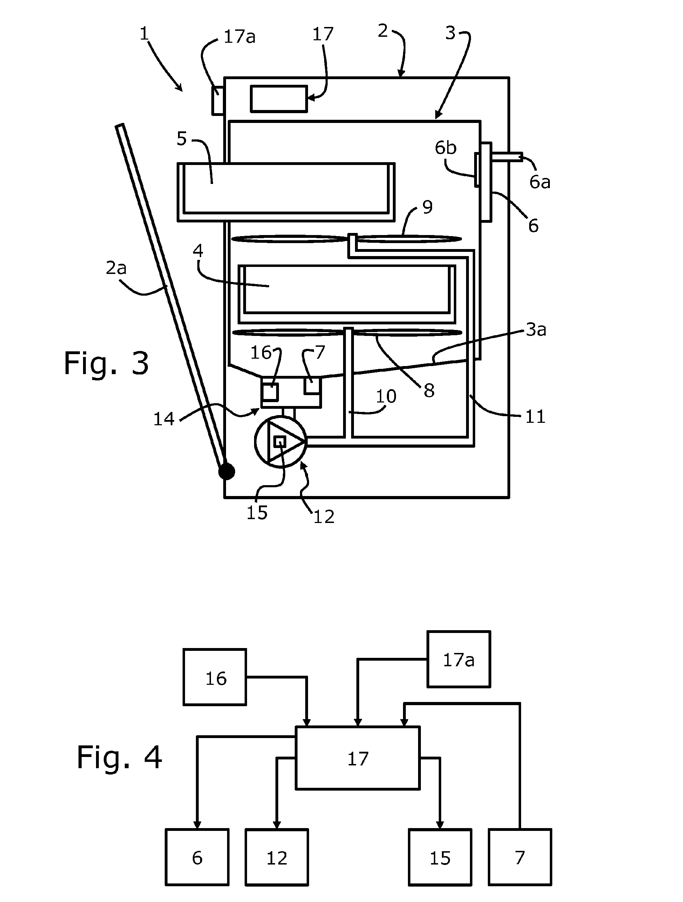

Figure 3 shows another machine 1 implemented according to the invention. This machine differs from that of figure 1 essentially because in this case the device 13 is not provided for and the hydraulic supply circuit for sprinklers 8 and 9 is slightly different with respect to the first embodiment, nevertheless providing the two conduits 10 and 11 connected to the delivery section of the pump 12. Figure 4 is similar to figure 2, but refers to the machine in figure 3.

The general operation of the machine 1 of figure 3 is, for our purposes, similar to that described previously with reference to the first embodiment. In this case, during the heating step, or each heating step, the water exiting the pump 12 is directed both in conduit 10, connected to sprinkler 8, and in conduit 11, connected to sprinkler 9. Also in this embodiment, during the heating step, the system 17 drives the motor of the pump 12 at a reduced speed, which is lower than the treatment speed and which is such that the electric pump 12 has a head lower than the minimum head required to allow the water directed in conduit 11 to supply the sprinkler 9, that is, to pass through it and exit from its holes or nozzles. Therefore, at the reduced speed the head of the pump 12 is lower than that obtained at the treatment speed. Also in this case, the head of the pump 12 at the reduced speed does not allow complete wetting of the dishes by sprinkler 8.

In practice, in this case, during the heating step, or during each heating step, the water is forced from the pump 12 into conduit 10 and into conduit 11. The water passes through conduit 10 until it reaches the inside of sprinkler 8; because of the reduced head of the pump 12, the water that exit the sprinkler 8 in form of jets substantially does not reach the dishes contained in basket 4, or merely laps the lower part thereof.

On the other side, the water forced into conduit 11 enters the conduit itself but, due to the reduced head, it rises therein only up to a certain point, being unable to reach the sprinkler 9 and/or without being able to supply it with water escaping from its holes. Therefore, water in the conduit 11 cannot exceed a certain height, which depends (in a known way) also on the characteristics of the hydraulic circuit.

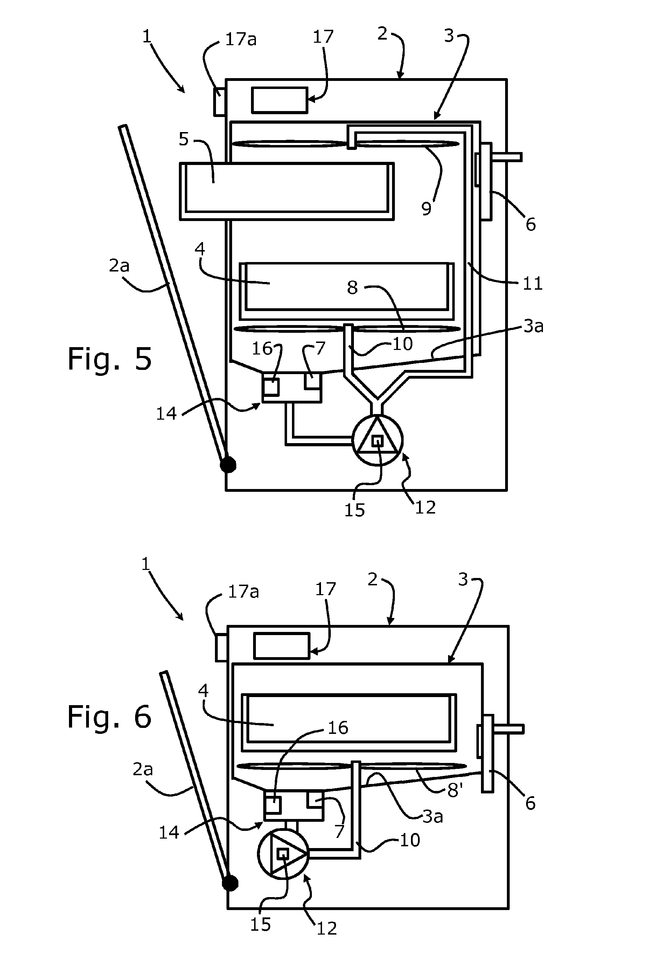

In the embodiment of figure 5, the machine 1 is of a design similar to the machine 1 of figure 3, except for slight differences in the hydraulic circuit supplying sprinklers 8 and 9, as well as for the arrangement of sprinkler 9 above the upper basket 5. The machine according to the embodiment in figure 5 can operate, for our purposes, in the same way described with reference to the machine 1 in figure 3. In addition, according to a first variant not shown, the machine 1 of figure 5 may include the device 13: in this variant, operation of the machine, for our purposes, can be analogous to that described with reference to the first and the second embodiments of figure 1 (and therefore with a variable speed motor 12 or with a device 13 adapted for introducing a pressure drop).

The embodiment shown in figure 6 concerns a dishwashing machine 1 with reduced loading capacity, that includes a single basket 4 and a single rotatable sprinkler 8 arranged below the basket 4. As will be appreciated, the operation of this machine, with respect to execution of heating steps, is similar to that described previously with reference to the use of a variable speed motor. Therefore, also in this solution, during the heating step, the motor of pump 12 will be driven at a reduced speed, lower than that for treatment speed and lower than the minimum speed required to obtain from the pump a sufficient water jet height from sprinkler 8' to cause a complete wetting of the dishes contained in basket 4. In a variant of the machine 1 in figure 6, a switchable shutter device could be provided for, of the type used previously to introduce a pressure drop in conduit 10, and therefore also not requiring a controllable speed motor.

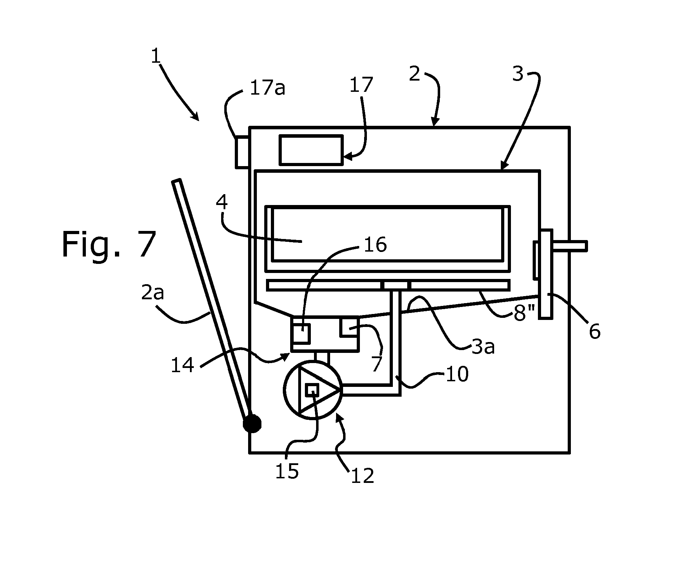

The embodiment in figure 7 concerns a dishwashing machine 1 with a design analogous to the machine 1 of figure 6, the only difference being that - in this case- a stationary sprinkler 8", i.e. that is not rotatable, is arranged under the basket 4. Sprinklers of this type are known and used in certain types of reduced loading capacity dishwashing machines. The hollow body of sprinkler 8" can include for example two arms arranged in a cross, or a plurality of arms radial with respect to the central zone of connection to conduit 10, and the holes or nozzles on each arm arrangement to provide water jets that strike substantially the entire contents of the basket 4, for the purpose of treatment. Obviously, the sprinkler 8" can have forms that differ from those indicated by way of example only, in any case configured to obtain a sufficient distribution from below of water onto the dishes contained in basket 4. The operation of the machine 1 in figure 7 is analogous, for our purposes, to the machine 1 of figure 6 or the relative variant mentioned above.

As was mentioned previously, according to a possible implementation of the invention, during a heating step the water exiting from the pump supplies a rotatable sprinkling member, and the reduced speed of the pump motor or the pressure drop introduced during that step is less than the minimum speed required to obtain a water pressure sufficient to cause rotation of the sprinkler.

The concept of supplying the sprinkler in a way that does not cause rotation is clearly applicable to the case of a rotatable sprinkler arranged below a dish-carrying basket, as for example the sprinkler 8' of figure 6. In fact, also in the case in which the water exiting from such sprinkler 8' produces water jets of a height that laps or strikes the contents of the basket 4, the water would always be in contact with a limited part of the dishes, with the effects described above with reference to figure 8.

The characteristics and the advantages of the present invention are clear from the above description.

It will be appreciated that the practical arrangements and the circuit means driving the motor of the pump 12 can be implemented in any known way by a person skilled in the art. It is equally clear that the hydraulic system of the dishwasher is designed with a view toward obtaining the functionality provided for according to the invention, with arrangements that are clear to the person skilled in art (considering, for example, that the water pressure in the system is established by the hydraulic characteristics imposed to the system itself, such as the section of the water conduits, the section of the sprinklers, the diameters of the sprinkler nozzles, etc.) and can be controlled - as was said - by varying the speed of the electric pump, and therefore of flow rate thereof, and/or introducing a narrowing by means of a switchable hydraulic shutter or partializing device.

Clearly, without prejudice to principle of the invention, the details of construction and the embodiments may vary, even appreciably, with reference to what has been described and illustrated by way of example only, without departing from the scope of the invention as defined by the attached claims.

In the case of machines with two sprinklers, the electric pump used can be a dual delivery pump, for example of the type described in EP-A-1004266. In that case, the delivery section of the pump comprises a first and a second outlet, connected to the supply conduit of the lower sprinkler and the supply conduit of the upper sprinkler, respectively. According to the type of implementation, the valve means - if used - can comprise a single electric valve or a shutter device upstream of the upper sprinkler, or two electric valves or two shutter devices upstream of the upper sprinkler and upstream of the lower sprinkler, respectively.

Finally it is clear that it is possible to combine the first and second embodiments described previously in a machine provided with both an electric pump with a controllable speed motor , and with a switchable partializing device.

## Claims

1. A method for treating dishes in a dishwashing machine, comprising:
i) at least one loading step, including loading an amount of water in a tub (3) of the machine (1) wherein dishes are contained in a basket (4);
ii) a heating step, including heating water loaded in the tub (3) up to a substantially predetermined temperature;
iii) a treatment step, including driving an electric pump (12) of the machine (1) at a treatment speed, to supply heated water from a bottom (3a, 14) of the tub (3) to at least one dish-sprinkling member (8, 9; 8'; 8"), arranged below the basket (4) and spaced apart therefrom, and make operation of the at least one sprinkling member (8, 9; 8'; 8") effective for the purpose of treating the dishes;
wherein in at least one part of the heating step the electric pump (12) is active, and wherein
- the heating step comprises supplying with water leaving the electric pump (12) the at least one sprinkling member (8, 9; 8'; 8") to cause a water circulation among the electric pump (12), the at least one sprinkling member (8, 9; 8'; 8") and the bottom (3a, 14) of the tub (3),
- during the heating step the at least one sprinkling member (8, 9; 8'; 8") is supplied with a reduced pressure, which is lower than the minimum pressure required for rendering the operation of the at least one sprinkling member (8, 9; 8'; 8") effective,
**characterized in that** the said reduced pressure is greater than the minimum pressure required to obtain effective liquid jets exiting the at least one sprinkling member (8, 9; 8'; 8"), which develop in height towards the basket (4) and/or to cope with occasional charge losses of the pump-sprinkling member system, such as charge losses due to dirt residues retained by a filtering system which is upstream of the electric pump (12).

2. The method according to claim 1, wherein during the heating step in a conduit (10; 11) connecting the electric pump (12) to the at least one sprinkling member (8, 9; 8'; 8") a pressure drop is caused, such to obtain said reduced pressure, during the heating step the electric pump (12) being in particular driven substantially at the treatment speed.

3. The method according to claim 1, wherein during the heating step the electric pump (12) is driven at a reduced speed, which is lower than the treatment speed and lower than the minimum speed required for obtaining a head from the electric pump (12) that is sufficient to render operation of the at least one sprinkling member effective (8, 9; 8'; 8"), but anyway sufficient for generating the said effective jets, having preferably a height not lower than to about 1 cm, and/or for guaranteeing an affective circulation of the liquid also in presence of the said occasional charge losses.

4. The method according to claim 2 or claim 3, wherein during the heating step water is not brought substantially into contact with dishes contained in the basket (4) or water laps only the lower part of the basket.

5. The method according to claim 2 or claim 3, wherein during the heating step water leaving the electric pump (12) is not supplied to a further sprinkling member (9), which is in particular arranged above the dishes.

6. The method according to claim 5, wherein, during the heating step, water leaving the electric pump (12) is directed to a conduit (11) connected to the further sprinkling member (9), and wherein, in presence of said reduced speed or said pressure drop, the electric pump (12) has a head lower than the minimum head required for allowing water directed to the conduit (11) to supply the further sprinkling member (9).

7. A dishwashing machine having a washing tub (3), at least one first basket (4, 5; 4) for containing dishes in the tub (3), loading means (6) for loading water in the tub (3), a sprinkling system (8-11; 8', 10; 11; 8", 10) including at least one first sprinkling member (8, 9; 8'; 8") for sprinkling from below dishes contained in the at least one first basket (4, 5; 4) with water, an electric pump (12) for supplying water from a bottom (3a, 14) of the tub (3) to the first sprinkling member (8, 9; 8'; 8"), heating means (15) for heating water, a control system (17) including command means (17a) for controlling starting of a treatment program including at least one loading step, at least one heating step and at least one treatment step, wherein the control system (17) is configured for controlling the loading means (6), the electric pump (12) and the heating means (15) during execution of the treatment program, such that:
- during the loading step a substantially predetermined amount of water is loaded in the tub (3);
- during the heating step water loaded in the tub (3) is heated up to a substantially predetermined temperature;
- during the treatment step the electric pump (12) is driven to a treatment speed for supplying heated water from the bottom (3a, 14) of the tub (3) to the first sprinkling member (8, 9; 8'; 8") so as to render operation of the first sprinkling member (8, 9; 8'; 8") effective for the purposes of treating the dishes contained in the first basket (4, 5);
the machine also comprising means (12; 13) for supplying the first sprinkling member (8, 9; 8'; 8") during the heating step at a reduced pressure, which is lower than the minimum pressure required to render operation of the first sprinkling member (8, 9; 8'; 8") effective, causing at the same time a water circulation among the electric pump (12), the first sprinkling member (8, 9; 8'; 8") and the bottom (3a, 14) of the tub (3),
**characterized in that** said means (12; 13) are prearranged such that said reduced pressure is greater than the minimum pressure required to obtain effective liquid jets exiting the at least one sprinkling member (8, 9; 8'; 8"), which jets develop in height towards the basket (4), and/or to cope with occasional charge losses of the pump-sprinkling member system, such as charge losses due to dirt residues retained by a filtering system which is upstream of the electric pump (12).

8. The machine according to claim 7, wherein said means (12, 13) comprise a switchable hydraulic device (13), configured for causing a pressure drop in a conduit (10; 11) connecting the electric pump (12) to the first sprinkling member (8, 9; 8'; 8"), the control system (17) being prearranged for controlling, during the heating step, the switchable hydraulic device (13) for obtaining said reduced pressure.

9. The machine according to claim 7, wherein said means (12, 13) comprise a controllable speed motor of the electric pump (12), the control system (17) being prearranged for driving, during the heating step, the motor of the electric pump (12) at a reduced speed, which is lower than the treatment speed and is lower than the minimum speed required for obtaining from the electric pump (12) a head sufficient to render the operation of the first sprinkling device (8, 9; 8'; 8") effective, but is sufficient for generating the said effective jets, having preferably a height not lower than about 1 cm and/or for guaranteeing an effective circulation of the liquid even in presence of the said occasional charge losses.

10. The machine according to claim 8 or claim 9, wherein
- the sprinkling system (8-11) includes at least one second sprinkling member (9) arranged in the tub (3) above the first basket (4, 5),
- the delivery section of the electric pump (12) is connected to the first and the second sprinkling member (8, 9) through a first and a second conduit (10, 11), respectively,
- the electric pump (12) has, at said reduced speed of the motor thereof and/or due to said pressure drop, a head lower than the minimum head required for allowing water to supply the second sprinkling member (9) through the second conduit (11).

11. The machine according to claim 8, wherein the switchable hydraulic device (13) is a partializing device or a device for the alternate supply of at least two sprinkling members of the machine, operatively arranged downstream of a delivery section of the electric pump (12).

12. The machine according to claim 9, wherein the motor of the electric pump (12) is one of a permanent magnets brushless motor and an asynchronous motor having associated therewith means adapted to partialize the corresponding supply current.
